# EUROPÄISCHE PATENTSCHRIFT

(11) **EP 4 071 364 B1**
(45) Veröffentlichungstag und Bekanntmachung des Hinweises auf die Patenterteilung: **11.02.2026**
(21) Anmeldenummer: 22182119.2
(22) Anmeldetag: 30.06.2022
(51) Int. Cl.: F04D 19/04, F04D 27/00, F04D 25/16, F04B 37/14, F04B 49/06

(54) **KOMMUNIKATIONSSYSTEM UMFASSEND EIN VAKUUMGERÄT UND EINE AUSWERTUNGSVORRICHTUNG, SOWIE VERFAHREN ZUM BETREIBEN DES KOMMUNIKATIONSSYSTEMS**
COMMUNICATION SYSTEM COMPRISING A VACUUM DEVICE AND AN EVALUATION DEVICE, AND METHOD FOR OPERATING THE COMMUNICATION SYSTEM
SYSTÈME DE COMMUNICATION DOTÉ D'UN APPAREIL À VIDE ET D'UN DISPOSITIF D'ÉVALUATION, AINSI QUE PROCÉDÉ PERMETTANT DE FAIRE FONCTIONNER LE SYSTÈME DE COMMUNICATION

(43) Veröffentlichungstag der Anmeldung: 12.10.2022
(73) Patentinhaber: Pfeiffer Vacuum Technology AG, 35614 Asslar (DE)
(72) Erfinder: SCHWEIGHÖFER, Michael, 35641 Schöffengrund (DE); BÖTTCHER, Jochen, 35394 Giessen (DE)
(74) Vertreter: Manitz Finsterwald Patent- und Rechtsanwaltspartnerschaft mbB

(56) Entgegenhaltungen:
- EP-A1- 3 456 979
- EP-A2- 3 951 738
- EP-B1- 3 647 600
- DE-A1- 102013 111 218
- DE-T2- 602004 005 154
- JP-A- 2020 176 525
- US-A1- 2019 356 537

## Beschreibung

Die Erfindung betrifft ein Kommunikationssystem mit einem Vakuumgerät und einer Auswertungsvorrichtung. Die Erfindung betrifft weiter ein Verfahren zum Betreiben eines Kommunikationssystems.

Es ist in der Praxis häufig erforderlich und wünschenswert, Betriebsparameter von Vakuumgeräten zu überwachen und auszuwerten. Dies erfolgt jedoch häufig über kabelgebundene Lösungen innerhalb von Firmennetzwerken an einem Industriestandort. Dies ist jedoch aufwändig zu installieren und zu warten.

Darüber hinaus werden Vakuumgeräte vor Ort am Industriestandort initialisiert und konfiguriert. Dies erfordert jedoch regelmäßig einen Servicetechniker. Außerdem birgt es die Gefahr, dass der Betreiber des Vakuumgeräts die Konfiguration fehlerhaft vornimmt. Außerdem verfügt ein Betreiber des Vakuumgeräts regelmäßig nicht über die Expertise, eine notwendige Wartung zu erkennen oder lehnt diese aus Kostengründen ab. Dies kann Auswirkungen bis zum Totalausfall des Vakuumgeräts nach sich ziehen.

Ebenso ist es wünschenswert, als Hersteller den regelmäßigen Betrieb und die übliche Nutzungsart des Vakuumgeräts zu kennen, um so auf Bedürfnisse des Betreibers des Vakuumgeräts reagieren zu können.

Aus der Druckschrift DE 60 2004 005 154 T2 ist eine Vakuumpumpenanlage bekannt, umfassend eine Vielzahl von Vakuumpumpvorrichtungen, die jeweils eine Vakuumpumpe und eine lokale elektronische Steuereinheit zum Überwachen und Steuern der Betriebsparameter der Pumpe aufweisen, sowie eine Fernsteuerstation, die relativ zur Vielzahl von Vakuumpumpvorrichtungen entfernt angeordnet ist und mit einer entsprechenden Fernsteuereinheit ausgestattet ist. Die Fernsteuereinheit und die lokalen elektronischen Steuereinheiten sind mit entsprechenden Datenübertragungsmodulen für Daten und Befehle zum Steuern des Betriebs der Vielzahl von Vakuumpumpvorrichtungen ausgestattet und die Datenübertragungsmodule sind drahtlose Datenübertragungsmodule, so dass das Datenübertragungsmodul der Fernsteuereinheit direkt mit den Datenübertragungsmodulen jeder lokalen Einheit kommuniziert.

Die Druckschrift US 2019 / 0 356 537 A1 beschreibt ein System, das eine entfernte Telemetrieeinheit verwendet, die ein kondensatorbasiertes Leistungsausfallsystem aufweist. In der Druckschrift JP 2020 176 525 A ist ein Pumpenüberwachungssystem und eine Vakuumpumpe offenbart. Die Druckschrift EP 3 647 600 B1 beschreibt eine Erkennung eines elektrisch angeschlossenen Zubehörs eines Vakuumpumpensystems.

Es ist daher eine Aufgabe der vorliegenden Erfindung, ein verbessertes Kommunikationssytem und ein verbessertes Verfahren zum Betreiben des Kommunikationssystems anzugeben.

Diese Aufgabe wird gelöst durch den Gegenstand der unabhängigen Ansprüche.

Insbesondere wird durch die erfindungsgemäße Lösung ermöglicht, dass Vakuumgeräte dem sogenannten Internet of Things angeschlossen werden. Auch wird durch die erfindungsgemäße Lösung erreicht, dass auf Hardwarekomponenten wie Router und Modems und insbesondere kabelgebundene Datenverbindungen verzichtet werden kann. Ebenso wird durch die erfindungsgemäße Lösung ermöglicht, dass die Leistung und Lebensdauer von Vakuumgeräten verbessert wird und Kosten über den Lebenszeitraum der Vakuumgeräte reduziert werden.

Dies wird zunächst erreicht durch ein Kommunikationssystem gemäß Anspruch 1.

Ein Vakuumgerät ist eine Vorrichtung, die im Zusammenhang mit einer Vakuumanwendung, insbesondere einer Vakuumerzeugung, verwendet wird. Beispielsweise ist ein Vakuumgerät eine Vakuumpumpe oder eine Komponente einer Vakuumpumpe, insbesondere einer Drehschieberpumpe, einer Membranpumpe, einer Scrollpumpe, einer Schraubenpumpe, einer Wälzkolbenpumpe oder einer Turbomolekularpumpe. Das Vakuumgerät kann auch aus mehreren Vakuumgeräten zusammengesetzt sein und einen Verbund von Vakuumgeräten bilden, wie beispielsweise eine Anordnung aus einer Turbomolekularpumpe, einer Vorpumpe und einer oder mehrerer Messröhren, die über ein gemeinsames Steuergerät miteinander verbunden sind und zusammenarbeiten.

Das Vakuumgerät umfasst zunächst ein Überwachungsmodul, das ausgebildet ist, Betriebsparameter des Vakuumgeräts zu überwachen. Ein Betriebsparameter umfasst sämtliche Parameter, die einen Betrieb des Vakuumgeräts mittelbar oder unmittelbar betreffen, insbesondere solche Parameter, die eine Komponente des Vakuumgeräts betreffen. Komponenten des Vakuumgeräts sind beispielsweise ein Rotor, ein Stator, ein Lager und/oder elektrische oder elektronische Komponenten, die die Leistungsversorgung und/oder Steuerung der Vakuumpumpe betreffen. Weitere beispielhaft genannte Komponenten des Vakuumgeräts sind Ventile, Messröhren und/oder Massenspektrometer des Vakuumgeräts.

Beispielsweise sind Betriebsparameter solche Parameter, die Betriebsmedien des Vakuumgeräts betreffen, wie beispielsweise eine Kühlflüssigkeit, insbesondere Kühlflüssigkeitstemperatur und/oder -durchfluss, oder ein Spülgas, insbesondere Spülgastemperatur und/oder -druck und/oder -durchfluss. Betriebsparameter können auch ein elektrischer Strom und/oder eine elektrische Spannung und/oder eine elektrische Leistung, insbesondere einen Strom- und/oder Spannungs- und/oder Leistungsverbrauch, sein, oder eine Drehzahl und/oder eine Temperatur und/oder ein Schwingungszustand und/oder eine Ausrichtung des Vakuumgeräts, insbesondere einer Komponente des Vakuumgeräts. Betriebsparameter können auch Messgrößen umfassen, insbesondere Messgrößen, die mittelbar mit dem Betrieb des Vakuumgeräts zusammenhängen bzw. erfasst werden, wie beispielsweise ein Druck in einer Messröhre oder Ergebnisses des Massenspektrometers.

Weiter beispielsweise sind Betriebsparameter solche Parameter, die Umgebungsgrößen des Vakuumgeräts betreffen, wie beispielsweise eine Umgebungstemperatur, eine Umgebungsfeuchte, einen Umgebungsdruck und/oder eine Umgebungsvibration.

Weiter beispielsweise sind Betriebsparameter solche Parameter, die Ereignisse des Vakuumgeräts betreffen, wie beispielsweise eine Spannungs- und/oder Strom- und/oder Leistungsänderung, und/oder eine eingeschränkte Funktionalität, wie beispielsweise eine Funktionseinschränkung und/oder ein Funktionsausfall einer Komponente des Vakuumgeräts und/oder ein Komplettausfall des Vakuumgeräts.

Es versteht sich, dass der Begriff Betriebsparameter im generischen Plural verwendet wird und auch einen einzelnen Betriebsparameter umfasst.

Ein Überwachen meint in dem folgenden Kontext insbesondere ein Erfassen, ein Aufzeichnen und/oder ein Auswerten, insbesondere mit geeigneten Sensoren. Beispielsweise kann die Drehzahl des Rotors einer Vakuumpumpe mithilfe eines Drehzahlsensors erfasst werden, es kann die Umgebungstemperatur mithilfe eines Temperatursensors erfasst werden oder es kann ein Kühlmitteldurchfluss mithilfe eines Durchflusssensors erfasst werden. Eine ggf. zusätzliche Auswertung kann insbesondere mithilfe eines geeigneten Prozessors erfolgen.

Erfindungsgemäß erfolgt das Auswerten der Betriebsparameter nicht in dem Vakuumgerät, sondern, wie weiter unten beschrieben, ausschließlich in der Auswertungsvorrichtung.

Das Auswerten der Betriebsparameter kann insbesondere das Erfassen eines oder mehrerer abstrakter Werte umfassen, die auf einen Zustand des Vakuumgeräts hinweisen. Erfindungsgemäß umfasst das Auswerten das Erstellen eines Gesundheitsindexes des Vakuumgeräts bzw. dessen Komponenten, wobei der Gesundheitsindex eine Zahl, insbesondere eine ganze Zahl oder eine Zahl mit einer oder zwei Nachkommastellen, ist, aus der sich ein allgemeiner Zustand des Vakuumgeräts erfassen lässt.

Die überwachten Betriebsparameter und/oder deren Auswertung können auf dem Vakuumgerät, beispielsweise einem Speichermodul, oder einer damit verbundenen Vorrichtung, wie beispielsweise einer Speichervorrichtung, zwischengespeichert werden. Insbesondere können die Betriebsparameter und/oder deren Auswertung beim Speichern verschlüsselt werden. Weiter insbesondere können die Betriebsparameter und/oder deren Auswertung derart verschlüsselt werden, dass der Käufer, Inhaber, Eigentümer oder Betreiber des Vakuumgeräts keinen Zugriff auf die Betriebsparameter und/oder deren Auswertung hat, und weiter insbesondere, dass lediglich die Auswertungsvorrichtung Zugriff auf die Betriebsparameter und/oder deren Auswertung hat.

Das Vakuumgerät umfasst weiter ein drahtloses Schnittstellenmodul, das ausgebildet ist, mit einem drahtlosen Schnittstellenmodul einer von dem Vakuumgerät entfernten Auswertungsvorrichtung zu kommunizieren. Insbesondere sind das drahtlose Schnittstellenmodul des Vakuumgeräts und das drahtlose Schnittstellenmodul der Auswertungsvorrichtung miteinander kompatible Schnittstellenmodule. Die drahtlosen Schnittstellenmodule erfüllen und/oder unterstützen dabei einen drahtlosen Kommunikationsstandard. Ein drahtloser Kommunikationsstandard ist beispielsweise einen Mobilfunkstandard wie 3G, 4G, 5G. Alternativ oder zusätzlich ist der drahtlose Kommunikationsstandard WLAN, insbesondere 802.11, oder Bluetooth. Erfindungsgemäß kommunizieren das Vakuumgerät und die Auswertungsvorrichtung direkt miteinander, das bedeutet ohne dazwischengeschaltete Relays oder Proxys. Das Schnittstellenmodul kann insbesondere in Verbindung mit einem Steuergerät des Vakuumgeräts verbunden und/oder darin integriert sein.

Gemäß einer Ausführungsform ist der drahtlose Kommunikationsstandard LongRange oder LoRa. LongRange ist ein Funkstandard, der in einem vergleichsweise niedrigen Frequenzband zwischen 400 MHz und 900 MHz arbeitet und so aufgrund der daraus resultierenden vergleichsweise hohen Wellenlänge eine besonders gute Reichweite und Durchdringung von Böden und Wänden aufweist, selbst bei geringen Sendeleistungen. Hierdurch werden besonders wenige Komponenten benötigt. Insbesondere können LongRange-Gateways der öffentlichen Infrastruktur verwendet werden, ein sogenanntes LongRange-WAN oder Wide Area Network. Somit ist dieser Standard unabhängig von privaten Mobilfunkbetreibern. Auch liegt der LongRange-Standard im freien Bereich des Funkspektrums, wodurch er keinen Nutzungsgebühren unterliegt. Hierdurch ergibt sich eine besonders kostengünstige Kommunikation.

Die Auswertungsvorrichtung ist entfernt von dem Vakuumgerät angeordnet. Entfernt meint vorliegend voneinander beabstandet und/oder räumlich entfernt, insbesondere mindestens mehrere Meter, weiter insbesondere Kilometer. Die Auswertungsvorrichtung ist entweder ein entfernter Server, der in einem Rechenzentrum steht oder teilweise oder vollständig in einer Cloud realisiert. Alternativ oder zusätzlich, jedoch nicht beansprucht ist die Auswertungsvorrichtung als ein mobiles Endgerät ausgebildet, das insbesondere Zugriff auf die Cloud haben kann. Insbesondere ist die Auswertungsvorrichtung derart ausgestaltet, dass nur der Hersteller oder Vertreiber des Vakuumgeräts Zugriff hat, und weiter insbesondere nicht der Käufer, Inhaber, Eigentümer oder Betreiber des Vakuumgeräts.

Das Schnittstellenmodul des Vakuumgeräts ist dabei ausgebildet, die zuvor überwachten Betriebsparameter und/oder die Auswertung an die Auswertungsvorrichtung bereitzustellen. Das Bereitstellen kann dabei verschlüsselt, insbesondere mit einer End-to-End-Verschlüsselung, erfolgen.

Das Überwachen und Bereitstellen der Betriebsparameter erfolgt insbesondere regelmäßig bzw. periodisch oder wiederholend, wie beispielsweise einmal wöchentlich, einmal täglich, stündlich, minütlich oder sekündlich. Insbesondere können die Betriebsparameter über einen längeren Zeitraum überwacht bzw. erfasst und gesammelt und dann gesammelt an die Auswertungsvorrichtung bereitgestellt werden.

Das Bereitstellen kann dabei auch als Senden, durch die drahtlose Schnittstelle des Vakuumgeräts, und/oder als Abrufen, durch die drahtlose Schnittstelle der Auswertungsvorrichtung, verstanden werden. Das Bereitstellen kann dabei entweder autonom, das bedeutet ohne Anfrage der Auswertungsvorrichtung, erfolgen oder in Erwiderung auf eine Anfrage der Auswertungsvorrichtung.

Durch diese Ausführungsform wird es ermöglicht, eine oder mehrere Vakuumgeräte an einem zentralen Ort auszuwerten. Insbesondere wird so erreicht, dass durch die Auswertung früh Schäden, Fehlfunktionen oder Fehlbedienungen an einem jeweiligen Vakuumgerät oder an Komponenten des Vakuumgeräts erkannt und so geeignete Maßnahmen z.B. im Sinne einer Wartung oder eines Austausches einer oder mehrerer Komponenten ergriffen werden können. So kann beispielsweise basierend auf der Auswertung ein Servicetechniker beauftragt oder dem Kunden eine Selbstservice-Anweisung geschickt werden. Somit wird auch die Lebensdauer von Vakuumgeräten und die Kundenzufriedenheit erhöht.

Gemäß einer Ausführungsform ist das drahtlose Schnittstellenmodul des Vakuumgeräts ausgebildet, mit einem drahtlosen Schnittstellenmodul eines zweiten Vakuumgeräts zu kommunizieren und Betriebsparameter des zweiten Vakuumgeräts von dem zweiten Vakuumgerät zu empfangen, wobei das drahtlose Schnittstellenmodul des Vakuumgeräts weiter ausgebildet ist, die Betriebsparameter des zweiten Vakuumgeräts an die Auswertungsvorrichtung bereitzustellen.

Das zuvor beschriebene Vakuumgerät kann dabei auch als erstes Vakuumgerät bezeichnet werden. Dabei ist das drahtlose Schnittstellenmodul des ersten Vakuumgeräts ausgebildet, mit einem drahtlosen Schnittstellenmodul eines zweiten Vakuumgeräts zu kommunizieren.

Das drahtlose Schnittstellenmodul des zweiten Vakuumgeräts kann dabei ähnlich oder gleich dem zuvor beschriebenen drahtlosen Schnittstellenmodul des ersten Vakuumgeräts ausgebildet sein.

Das drahtlose Schnittstellenmodul des ersten Vakuumgeräts ist dabei ausgebildet, Betriebsparameter des zweiten Vakuumgeräts, die das zweite Vakuumgerät, insbesondere ein Überwachungsmodul des zweiten Vakuumgeräts, das ähnlich oder gleich zum Überwachungsmodul des ersten Vakuumgeräts ausgebildet ist, erfasst hat, zu empfangen.

Bei den Betriebsparametern des zweiten Vakuumgeräts kann es sich um ähnliche oder gleiche Betriebsparameter wie die des ersten Vakuumgeräts, wie oben beschrieben, handeln.

Das drahtlose Schnittstellenmodul des ersten Vakuumgeräts ist dabei weiter ausgebildet, die zuvor von dem zweiten Vakuumgerät empfangenen Betriebsparameter an die Auswertungsvorrichtung bereitzustellen. Die Auswertungsvorrichtung ist dabei nicht nur entfernt zu dem ersten Vakuumgerät, sondern auch entfernt zu dem zweiten Vakuumgerät angeordnet. Insbesondere handelt das erste Vakuumgerät als Relay oder Proxy für das zweite Vakuumgerät.

Insbesondere sind das erste Vakuumgerät und das zweite Vakuumgerät in einer gemeinsamen Industriehalle und/oder an einem gemeinsamen Industriestandort angeordnet. Weiter insbesondere sind das erste Vakuumgerät und das zweite Vakuumgerät Vakuumgeräte eines einzelnen Käufers, Inhabers, Eigentümers oder Betreibers der Vakuumgeräte.

Alternativ kann das erste Vakuumgerät mit dem zweiten Vakuumgerät auch über eine andere Schnittstelle kommunizieren. Insbesondere können das erste Vakuumgerät und das zweite Vakuumgerät auch über eine kabelgebundene Schnittstelle verbunden sein, wie beispielsweise eine serielle Schnittstelle, oder mittels diskreter digitaler oder analoger Signale.

Durch diese Ausführungsform wird es ermöglicht, dass ein zweites Vakuumgerät, das keinen oder nur einen schlechten Zugriff auf eine drahtlose Kommunikationsverbindung zur entfernten Auswertungsvorrichtung hat, beispielsweise weil sie in einem vom Mobilfunknetz abgeschirmten Teil eines Industriestandorts angeordnet ist, dennoch von der Auswertungsvorrichtung ausgewertet werden kann.

Ein Steuermodul ist geeignet, eine Funktion, insbesondere eine Betriebsfunktion, des Vakuumgeräts zu steuern oder zu beeinflussen. Beispielsweise kann das Steuermodul eine Drehzahl einer Komponente wie z.B. des Rotors einer Turbomolekularpumpe oder eine Spannung, einen Strom oder eine Leistung, die an dem Vakuumgerät anliegt, beeinflussen. Dies erfolgt durch den Empfang von Steuerparametern von der Auswertungsvorrichtung, wie dies weiter unten noch konkreter beschrieben wird. Steuerparameter wird hier im generischen Plural verwendet und umfasst auch einen einzigen Steuerparameter.

Die Steuerparameter können auch eine Aktualisierung, insbesondere eine Firmware-Aktualisierung, für das Vakuumgerät bzw. eine oder mehrere der Komponenten des Vakuumgeräts umfassen.

Insbesondere können die Steuerparameter nach vorheriger Aufschaltung und Sichtung der vorgenommenen Auswertung durch einen sich an dem entfernten Ort aufhaltenden Servicetechniker auf den jeweils vorliegenden Fall ausgearbeitet bzw. angepasst werden und so an das Vakuumgerät übertragen werden.

Durch diese Ausführungsform wird es zum Beispiel ermöglicht, aktiv bei drohenden Schäden, Fehlfunktionen oder Fehlbedienungen an Komponenten des Vakuumgeräts entgegenzuwirken und so ebenfalls die Lebensdauer eines Vakuumgeräts zu verlängern. Ebenfalls wird durch diese Ausführungsform ein sogenanntes Over-The-Air-Update ermöglicht.

Gemäß einer Ausführungsform ist das drahtlose Schnittstellenmodul des ersten Vakuumgeräts weiter ausgebildet ist, Steuerparameter für das zweite Vakuumgerät von der Auswertungsvorrichtung zu empfangen und an das Schnittstellenmodul des zweiten Vakuumgeräts bereitzustellen.

Insbesondere handelt auch in dieser Ausführungsform das erste Vakuumgerät als Relay oder Proxy für das zweite Vakuumgerät, wie zuvor beschrieben.

Durch diese Ausführungsform wird erreicht, dass ein zweites Vakuumgerät, das, wie oben beschrieben, keinen oder nur einen schlechten Zugriff auf eine drahtlose Kommunikationsverbindung hat, dennoch mit Steuerparametern von der entfernten Auswertungsvorrichtung versorgt werden kann.

Gemäß einer Ausführungsform bedingen die Steuerparameter eine Abschaltung einer Funktion des ersten Vakuumgeräts.

Das drahtlose Schnittstellenmodul des ersten Vakuumgeräts empfängt in dieser Ausführungsform Steuerparameter von der Auswertungsvorrichtung, wobei durch die Anwendung der Steuerparameter in dem Steuermodul eine zuvor in Kraft befindliche, das bedeutet aktive Funktion, deaktiviert wird.

Beispielsweise kann durch den Empfang der Steuerparameter eine Vakuumpumpe gänzlich ausgeschaltet oder die Drehzahl eines Rotors einer Vakuumpumpe auf einen niedrigen "Stand-by-"Wert geregelt werden.

Durch diese Ausführungsform wird es ermöglicht, besonders effizient bei drohenden Schäden, Fehlfunktionen oder Fehlbedienungen an Komponenten des Vakuumgeräts entgegenzuwirken. Darüber hinaus kann ein Hersteller oder Vertreiber der Vakuumgeräte selektiv einzelne Funktionen abschalten, insbesondere dann, wenn ein Käufer, Inhaber, Eigentümer oder Betreiber des Vakuumgeräts ausstehende Forderungen nicht beglichen hat oder für bestimmte Dienste nicht mehr zahlen möchte. Auch wird kein Servicetechniker vor Ort benötigt, um Funktionen zu deaktivieren.

Gemäß einer Ausführungsform bedingen die Steuerparameter eine Freischaltung einer Funktion des ersten Vakuumgeräts.

Das drahtlose Schnittstellenmodul des ersten und/oder zweiten Vakuumgeräts empfängt in dieser Ausführungsform Steuerparameter von der Auswertungsvorrichtung, wobei durch die Anwendung der Steuerparameter in dem Steuermodul eine zuvor nicht in Kraft befindliche, das bedeutet deaktivierte Funktion, aktiviert wird.

Während beispielsweise vor dem Empfang der Steuerparameter lediglich vergleichsweise geringe Pumpleistungen einer Vakuumpumpe als erstem und/oder zweitem Vakuumgerät möglich waren, können nach dem Empfang der Steuerparameter höhere Pumpleistungen erreicht werden.

Durch diese Ausführungsform wird es ermöglicht, besonders effizient auf Kundenwünsche nach bestimmten Funktionen einzugehen. Insbesondere wird kein Servicetechniker vor Ort benötigt, um neue Funktionen zu ermöglichen. Darüber hinaus kann ein Hersteller oder Vertreiber der Vakuumgeräte selektiv einzelne Funktionen freigeben, insbesondere dann, wenn ein Käufer, Inhaber, Eigentümer oder Betreiber des Vakuumgeräts bereit ist, für bestimmte Dienste, auch nur vorübergehend, zu zahlen. Der Benutzer kann sich z.B. (wie bei Computerspielen) bestimmte Fähigkeiten einer Vakuumpumpe kaufen oder mieten.

Gemäß einer Ausführungsform bedingen die Steuerparameter eine Einschränkung einer Funktion des ersten Vakuumgeräts.

Das drahtlose Schnittstellenmodul des ersten und/oder zweiten Vakuumgeräts empfängt in dieser Ausführungsform Steuerparameter von der Auswertungsvorrichtung, wobei durch die Anwendung der Steuerparameter in dem Steuermodul eine zuvor in Kraft befindliche Funktion eingeschränkt wird.

Während beispielsweise vor dem Empfang der Steuerparameter vergleichsweise hohe Pumpleistungen einer Vakuumpumpe als erstem und/oder zweitem Vakuumgerät möglich waren, können nach dem Empfang der Steuerparameter nur noch geringere Pumpleistungen erreicht werden.

Durch diese Ausführungsform wird es ermöglicht, besonders effizient bei drohenden Schäden, Fehlfunktionen oder Fehlbedienungen an Komponenten des Vakuumgeräts entgegenzuwirken. Darüber hinaus kann ein Hersteller oder Vertreiber der Vakuumgeräte selektiv einzelne Funktionen einschränken, insbesondere dann, wenn ein Käufer, Inhaber, Eigentümer oder Betreiber des Vakuumgeräts dies wünscht, ausstehende Forderungen nicht beglichen hat oder für bestimmte Dienste nicht, insbesondere nicht mehr, zahlen möchte, insbesondere dann, wenn er diese Dienste nur vorübergehend gebucht hat. Auch wird kein Servicetechniker vor Ort benötigt, um Funktionen einzuschränken.

Gemäß einer nicht beanspruchten Ausführungsform ist das drahtlose Schnittstellenmodul des Vakuumgeräts weiter ausgebildet ist, eine Kommunikationsverbindung mit dem drahtlosen Schnittstellenmodul der Auswertungsvorrichtung zu prüfen und, wenn die Kommunikationsverbindung nicht besteht, die Betriebsparameter an eine Verstärkungsvorrichtung bereitzustellen.

Eine Verstärkungsvorrichtung ist eine Vorrichtung, die ein empfangenes Signal, insbesondere ein drahtloses Signal, verstärkt und weiterleitet. Insbesondere umfasst die Verstärkungsvorrichtung ebenso ein drahtloses Schnittstellenmodul, das ausgebildet ist, mit dem drahtlosen Schnittstellenmodul des ersten und/oder zweiten Vakuumgeräts und/oder mit dem drahtlosen Schnittstellenmodul der Auswertungsvorrichtung zu kommunizieren. Weiter insbesondere ist die Verstärkungsvorrichtung ausgebildet, Daten von dem Vakuumgerät zu empfangen und an die Auswertungsvorrichtung bereitzustellen, also an diese weiterzuleiten. Auch kann die Verstärkungsvorrichtung die Signalstärke der empfangenen Daten erhöhen.

Die Verstärkungsvorrichtung fungiert hier ebenfalls als Relay oder Proxy und kann sowohl zur Verstärkung einer Kommunikation zwischen zwei Vakuumgeräten als auch zur Verstärkung einer Kommunikation zwischen einem Vakuumgerät und der Auswertungsvorrichtung dienen.

Die Verstärkungsvorrichtung kann insbesondere von der Auswertungsvorrichtung entfernt angeordnet und kann entweder zusammen mit dem ersten und/oder zweiten Vakuumgerät angeordnet sein oder sich auch davon entfernt befinden.

Durch diese Ausführungsform wird ermöglicht, dass ein Vakuumgerät, das, wie oben beschrieben, keinen oder nur einen schlechten Zugriff auf eine drahtlose Kommunikationsverbindung hat, dennoch mit der entfernten Auswertungsvorrichtung kommunizieren kann.

Die Auswertung der Betriebsparameter erfolgt dabei mithilfe eines geeigneten Prozessors. Insbesondere können die Betriebsparameter von dem Rechenmodul über die Zeit ausgewertet werden. Beispielsweise lassen sich so bereits kleinste Veränderungen der Betriebsparameter erkennen und es kann so auf einen Ausfall oder eine bevorstehende nötige Wartung oder einen Austausch von Komponenten des Vakuumgeräts geschlossen werden.

Gemäß einer Ausführungsform ist das Rechenmodul ausgebildet, die empfangenen Betriebsparameter mithilfe einer künstlichen Intelligenz auszuwerten.

Dabei kann es sich insbesondere um eine auf maschinellem Lernen basierende künstliche Intelligenz handeln, die beispielsweise ein neuronales Netz verwendet.

Durch diese Ausführungsform wird eine besonders effiziente und automatisierte Auswertung ermöglicht, die kein menschliches Zutun mehr erfordert.

Bezüglich weiterer Vorteile und Ausführungsformen der Auswertungsvorrichtung wird auch auf die zuvor beschriebenen Vorteile und Ausführungsformen des Vakuumgeräts verwiesen.

Gemäß einer Ausführungsform umfasst das Kommunikationssystem weiter ein zweites Vakuumgerät, umfassend ein Überwachungsmodul, das ausgebildet ist, Betriebsparameter des zweiten Vakuumgeräts zu überwachen, und ein drahtloses Schnittstellenmodul, das ausgebildet ist, mit dem drahtlosen Schnittstellenmodul der Auswertungsvorrichtung zu kommunizieren und die Betriebsparameter an die Auswertungsvorrichtung bereitzustellen, wobei das Rechenmodul weiter ausgebildet ist, die empfangenen Betriebsparameter auszuwerten.

Bei dem zweiten Vakuumgerät kann es sich insbesondere um eine Ausführungsform des zuvor beschriebenen zweiten Vakuumgeräts handeln.

Bezüglich weiterer Vorteile und Ausführungsformen des Kommunikationssystems wird auch auf die zuvor beschriebenen Vorteile und Ausführungsformen des Vakuumgeräts, insbesondere des ersten Vakuumgeräts, und der Auswertungsvorrichtung verwiesen.

Die eingangs genannte Aufgabe wird auch gelöst durch ein Verfahren gemäß Anspruch 8 zum Betreiben eines Kommunikationssystem.

Das Verfahren kann optional das Bereitstellen eines Kommunikationssystems, insbesondere eines Kommunikationssystems nach einer der zuvor beschriebenen Ausführungsformen, umfassen.

Das Verfahren kann insbesondere teilweise oder vollständig durch eine Ausführungsform eines zuvor beschriebenen Kommunikationssystems durchgeführt werden.

Bezüglich der Vorteile und Ausführungsformen der Verfahren wird auf die zuvor beschriebenen Vorteile und Ausführungsformen des Vakuumgeräts, der Auswertungsvorrichtung und des Kommunikationssystems verwiesen.

Ausführungsformen des Kommunikationssystems sowie des Verfahrens zum Betreiben eines Kommunikationssystem werden nun anhand der folgenden Figuren beschrieben. Es zeigen:
- Fig. 1: eine schematische Ansicht einer Ausführungsform eines Vakuumgeräts, einer Auswertungsvorrichtung sowie eines Kommunikationssystems; und
- Fig. 2: ein Ablaufdiagramm einer Ausführungsform eines Verfahrens zum Betreiben eines Vakuumgeräts, eines Verfahrens zum Betreiben einer Auswertungsvorrichtung und eines Verfahren zum Betreiben eines Kommunikationssystems

Dabei bezeichnen gleiche Bezugszeichen gleiche oder ähnliche Merkmale.

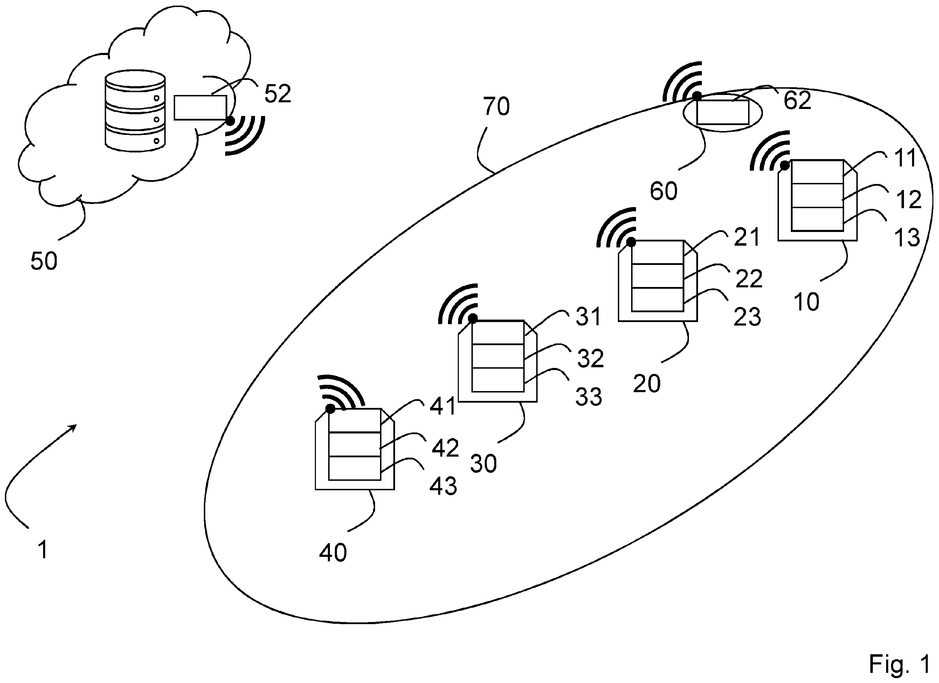

Fig. 1 zeigt eine schematische Ansicht einer Ausführungsform eines Vakuumgeräts 10, einer Auswertungsvorrichtung 50 sowie eines Kommunikationssystems 1.

Das Kommunikationssystem 1 weist dabei exemplarisch ein erstes Vakuumgerät 10, ein zweites Vakuumgerät 20, ein drittes Vakuumgerät 30 und ein viertes Vakuumgerät 40 auf. Es versteht sich, dass das Kommunikationssystem 1 sowohl weniger Vakuumgeräte umfassen kann, beispielsweise ein einziges oder genau zwei als auch mehr, beispielsweise fünf, zehn oder mehr Vakuumgeräte. Wenn im folgenden generisch der Begriff "Vakuumgeräte" verwendet wird, ist damit sowohl ein einziges als auch mehrere Vakuumgeräte gemeint.

Die Vakuumgeräte sind dabei ebenfalls exemplarisch als sich an einem gemeinsamen Ort befindlich dargestellt, wie beispielsweise in einer gemeinsamen Industriehalle und/oder an einem gemeinsamen Industriestandort 70, insbesondere eines einzelnen Inhabers oder Eigentümers der Vakuumgeräte.

Das Kommunikationssystem 1 umfasst weiter eine Auswertungsvorrichtung 50, die entfernt von den Vakuumgeräten und insbesondere entfernt von dem Industriestandort 70 angeordnet ist. Wie abgebildet, befindet sich die Auswertungsvorrichtung 50 zumindest teilweise in einer Cloud. Alternativ oder zusätzlich können sich zumindest Teile der Auswertungsvorrichtung 50 an einem Standort des Herstellers oder Vertreibers der Vakuumgeräte befinden.

Das Kommunikationssystem 1 umfasst auch eine außerhalb des Umfangs der Erfindung liegende Verstärkungsvorrichtung 60, die ebenfalls an dem Industriestandort 70, zusammen mit den Vakuumgeräten, angeordnet ist. Alternativ oder zusätzlich kann die Verstärkungsvorrichtung auch an einem von dem Industriestandort 70 entfernten Ort angeordnet sein.

Das erste Vakuumgerät 10 umfasst dabei ein Überwachungsmodul 11, ein drahtloses Schnittstellenmodul 12 und ein Steuermodul 13. Das zweite Vakuumgerät 20, das dritte Vakuumgerät 30 und das vierte Vakuumgerät 40 umfassen jeweils ebenso ein Überwachungsmodul 41, ein drahtloses Schnittstellenmodul 42 und ein Steuermodul 43.

Die Auswertungsvorrichtung 50 umfasst ein drahtloses Schnittstellenmodul 52 und die Verstärkungsvorrichtung 60 umfasst ebenfalls ein drahtloses Schnittstellenmodul 62. Die drahtlosen Schnittstellenmodule der Vakuumgeräte, der Auswertungsvorrichtung 50 und der Verstärkungsvorrichtung 60 sind dabei alle ausgebildet, miteinander zu kommunizieren.

Zusätzlich können die Vakuumgeräte, die Auswertungsvorrichtung 50 und/oder die Verstärkungsvorrichtung 60 weitere Module umfassen, die aus Gründen der Übersichtlichkeit nicht gezeigt sind. Beispielsweise können die Vakuumgeräte ein oder mehrere Speichermodule und/oder ein oder mehrere Prozessormodule umfassen.

Die jeweiligen Überwachungsmodule der Vakuumgeräte überwachen dabei dauerhaft Betriebsparameter der jeweiligen Vakuumgeräte und speichern diese in einem Speichermodul. Nach einem vordefinierten Zeitraum oder bei einem Eintritt eines vordefinierten Ereignisses stellt dann das jeweilige drahtlose Schnittstellenmodul die Betriebsparameter direkt an die entfernte Auswertungsvorrichtung 50 über das jeweilige drahtlose Schnittstellenmodul bereit, wie im Folgenden beschrieben wird.

Dabei ist in Fig. 1 beispielhaft gezeigt, dass das drahtlose Schnittstellenmodul 12 des ersten Vakuumgeräts 10 mit dem drahtlosen Schnittstellenmodul 62 der Verstärkungsvorrichtung 60 kommuniziert und seine überwachten Betriebsparameter an die Verstärkungsvorrichtung 60 bereitstellt. Dies erfolgt beispielsweise, weil das erste Vakuumgerät 10 an einem ungünstigen Standort an dem Industriestandort 70 steht, an dem es keinen ausreichenden drahtlosen Empfang hat und so eine direkte Kommunikation mit der Auswertungsvorrichtung 50 nicht möglich ist. Die Verstärkungsvorrichtung 60 stellt dann die empfangenen Betriebsparameter von dem ersten Vakuumgerät an die entfernte Auswertungsvorrichtung 50 bereit.

Ebenso wie in Fig 1 gezeigt haben das zweite Vakuumgerät 20 und das dritte Vakuumgerät 30 bzw. deren drahtlose Schnittstellemodule ausreichenden drahtlosen Empfang und stellen ihre überwachten Betriebsparameter direkt an die entfernte Auswertungsvorrichtung 50 bereit.

Weiter ist in Fig. 1 beispielhaft gezeigt, dass das drahtlose Schnittstellenmodul 42 des vierten Vakuumgeräts 40 mit dem drahtlosen Schnittstellenmodul 32 des dritten Vakuumgeräts 32 kommuniziert und somit das vierte Vakuumgerät 40 seine überwachten Betriebsparameter an das dritte Vakuumgerät 30 und nicht direkt an die Auswertungsvorrichtung 50 bereitstellt. Dies kann insbesondere dann erfolgen, wenn das vierte Vakuumgerät 40 an einem ungünstigen Standort an dem Industriestandort 70 steht, an dem es keinen ausreichenden drahtlosen Empfang hat und so eine direkte Kommunikation mit der Auswertungsvorrichtung 50 nicht möglich ist und sich auch keine Verstärkungsvorrichtung 60, wie zuvor beschrieben, in Reichweite befindet.

Die empfangenen Betriebsparameter werden dann an der Auswertungsvorrichtung 50 ausgewertet und basierend darauf Steuerparameter erstellt und an die jeweiligen Vakuumgeräte bereitgestellt. Dies erfolgt beim ersten Vakuumgerät 10 erneut über die Verstärkungsvorrichtung 60, beim zweiten Vakuumgerät 20 und beim dritten Vakuumgerät 30 jeweils direkt und beim vierten Vakuumgerät 40 über das dritte Vakuumgerät 30.

Basierend auf den empfangenen Steuerparametern werden dann mithilfe der jeweiligen Steuermodule Funktionen der Vakuumgeräte gesteuert. Dabei bedingen die Steuerparameter beispielsweise eine Abschaltung, eine Freischaltung und/oder eine Einschränkung einer Funktion des ersten und/oder zweiten Vakuumgeräts, wie oben beschrieben.

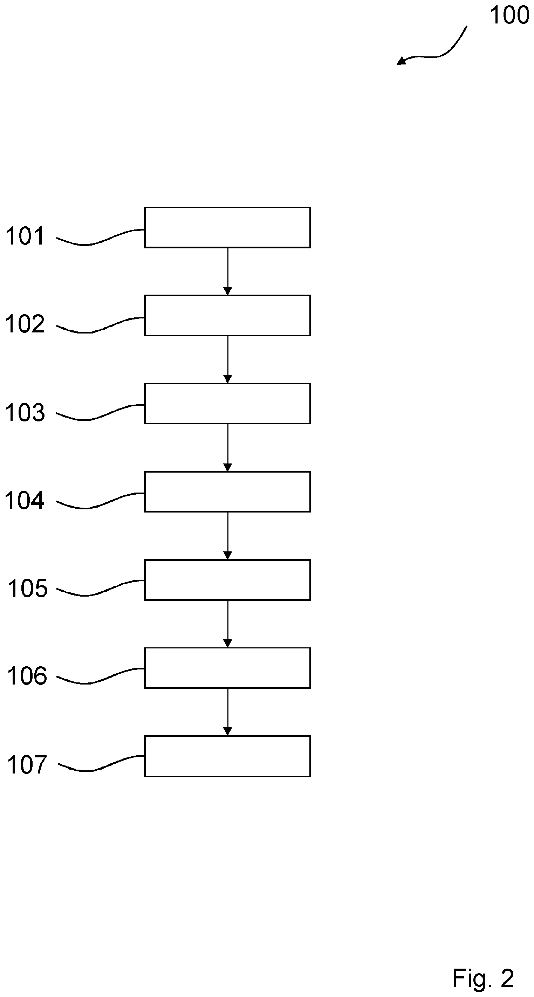

Fig. 2 zeigt ein Ablaufdiagramm von Ausführungsformen eines Verfahrens 100 zum Betreiben eines Vakuumgeräts, zum Betreiben einer Auswertungsvorrichtung und zum Betreiben eines Kommunikationssystems.

In einem ersten Schritt 101 des Verfahrens 100 werden Betriebsparameter eines ersten Vakuumgeräts überwacht.

In einem weiteren Schritt 102 werden Betriebsparameter eines zweiten Vakuumgeräts in der Nähe des ersten Vakuumgeräts drahtlos empfangen.

In einem folgenden Schritt 103 werden die überwachten Betriebsparameter an eine von dem ersten Vakuumgerät entfernte Auswertungsvorrichtung drahtlos bereitgestellt und dort drahtlos empfangen. Dies kann entweder erfindungsgemäß direkt oder außerhalb des Umfangs der Erfindung über eine Verstärkungsvorrichtung erfolgen.

In einem weiteren Schritt 104 werden die empfangenen Betriebsparameter des ersten Vakuumgeräts und des zweiten Vakuumgeräts an der entfernten Auswertungsvorrichtung ausgewertet. Dies erfolgt mithilfe einer künstlichen Intelligenz.

In einem folgenden Schritt 105 werden basierend auf der Auswertung der Betriebsparameter von dem ersten Vakuumgerät und dem zweiten Vakuumgerät an der Auswertungsvorrichtung Steuerparameter für das erste Vakuumgerät und das zweite Vakuumgerät erstellt und an das erste Vakuumgerät drahtlos bereitgestellt. Dies kann entweder erfindungsgemäß direkt oder außerhalb des Umfangs der Erfindung über die Verstärkungsvorrichtung erfolgen.

In einem weiteren Schritt 106 stellt das erste Vakuumgerät die Steuerparameter für das zweite Vakuumgerät an das zweite Vakuumgerät drahtlos bereit.

In einem folgenden Schritt 107 werden die Steuerparameter für das erste Vakuumgerät an dem ersten Vakuumgerät und die Steuerparameter für das zweite Vakuumgerät an dem zweiten Vakuumgerät implementiert, um das erste Vakuumgerät und das zweite Vakuumgerät zu steuern. Dabei bedingen die Steuerparameter beispielsweise eine Abschaltung, eine Freischaltung und/oder eine Einschränkung einer Funktion des ersten und/oder zweiten Vakuumgeräts.

### Bezugszeichenliste

- 1: Kommunikationssystem
- 10: erstes Vakuumgerät
- 11: Überwachungsmodul
- 12: Schnittstellenmodul
- 13: Steuermodul
- 20: zweites Vakuumgerät
- 21: Überwachungsmodul
- 22: Schnittstellenmodul
- 23: Steuermodul
- 30: drittes Vakuumgerät
- 31: Überwachungsmodul
- 32: Schnittstellenmodul
- 33: Steuermodul
- 40: viertes Vakuumgerät
- 41: Überwachungsmodul
- 42: Schnittstellenmodul
- 43: Steuermodul
- 50: Auswertungsvorrichtung
- 51: Rechenmodul
- 52: Schnittstellenmodul
- 60: Verstärkungsvorrichtung
- 70: Industriestandort
- 100: Verfahren
- 101: Verfahrensschritt
- 102: Verfahrensschritt
- 103: Verfahrensschritt
- 104: Verfahrensschritt
- 105: Verfahrensschritt
- 106: Verfahrensschritt
- 107: Verfahrensschritt

## Patentansprüche

1. Kommunikationssystem (1) umfassend ein Vakuumgerät (10) und eine Auswertungsvorrichtung (50),
das Vakuumgerät (10) umfassend:
- ein Überwachungsmodul (11), das ausgebildet ist, Betriebsparameter des Vakuumgeräts (10) zu überwachen;
- ein drahtloses Schnittstellenmodul (12), das ausgebildet ist, mit einem drahtlosen Schnittstellenmodul (52) einer von dem Vakuumgerät (10) entfernten Auswertungsvorrichtung (50) zu kommunizieren und die Betriebsparameter an die Auswertungsvorrichtung (50) bereitzustellen; und
- ein Steuermodul (13), wobei das drahtlose Schnittstellenmodul (12) des Vakuumgeräts (10) weiter ausgebildet ist, Steuerparameter von der Auswertungsvorrichtung (50) zu empfangen, um das Steuermodul (13) des Vakuumgeräts zu steuern, wobei die Steuerparameter auf einer Auswertung der Betriebsparameter durch die Auswertungsvorrichtung (50) basieren,
wobei das Auswerten der Betriebsparameter ausschließlich in der Auswertungsvorrichtung (50) erfolgt,
wobei das Vakuumgerät (10) und die Auswertungsvorrichtung (50) direkt miteinander kommunizieren,
wobei die Auswertungsvorrichtung (50) ein entfernter Server ist, der in einem Rechenzentrum steht, oder teilweise oder vollständig in einer Cloud realisiert ist,
wobei die Betriebsparameter solche Parameter sind, die Betriebsmedien und/oder Umgebungsgrößen des Vakuumgeräts betreffen und/oder die Messgrößen umfassen,
wobei das Auswerten der Betriebsparameter das Erstellen eines Gesundheitsindexes des Vakuumgeräts bzw. dessen Komponenten umfasst, wobei der Gesundheitsindex eine Zahl, insbesondere eine ganze Zahl oder eine Zahl mit einer oder zwei Nachkommastellen, ist, aus der sich ein allgemeiner Zustand des Vakuumgeräts erfassen lässt,
wobei die Steuerparameter eine Freischaltung einer Funktion des Vakuumgeräts (10) bedingen, oder
wobei die Steuerparameter eine Aktualisierung, insbesondere eine Firmware-Aktualisierung, für das Vakuumgerät (10) bzw. eine oder mehrere der Komponenten des Vakuumgeräts (10) umfassen, und
die Auswertungsvorrichtung (50) umfassend:
- das drahtlose Schnittstellenmodul (52), das ausgebildet ist, mit dem drahtlosen Schnittstellenmodul (12) des von der Auswertungsvorrichtung (50) entfernten Vakuumgeräts (10) zu kommunizieren und von dem Vakuumgerät (10) überwachte Betriebsparameter zu empfangen; und
- ein Rechenmodul (51), das ausgebildet ist, die empfangenen Betriebsparameter auszuwerten,
wobei das drahtlose Schnittstellenmodul (52) der Auswertungsvorrichtung (50) weiter ausgebildet ist, basierend auf der Auswertung der Betriebsparameter von dem ersten Vakuumgerät (10) Steuerparameter an das Vakuumgerät (10) bereitzustellen.

2. Kommunikationssystem (1) nach Anspruch 1, wobei das drahtlose Schnittstellenmodul (12) des Vakuumgeräts (10) ausgebildet ist, mit einem drahtlosen Schnittstellenmodul (22) eines zweiten Vakuumgeräts (20) zu kommunizieren und Betriebsparameter des zweiten Vakuumgeräts (20) von dem zweiten Vakuumgerät (20) zu empfangen, und wobei das drahtlose Schnittstellenmodul (12) des Vakuumgeräts (10) weiter ausgebildet ist, die Betriebsparameter des zweiten Vakuumgeräts (20) an die Auswertungsvorrichtung (50) bereitzustellen.

3. Kommunikationssystem (1) nach Anspruch 2, wobei das drahtlose Schnittstellenmodul (12) des Vakuumgeräts (10) weiter ausgebildet ist, Steuerparameter für das zweite Vakuumgerät (20) von der Auswertungsvorrichtung (50) zu empfangen, und an das Schnittstellenmodul (22) des zweiten Vakuumgeräts (20) bereitzustellen.

4. Kommunikationssystem (1) nach Anspruch 1 bis 3,
wobei der Steuerparameter eine Abschaltung einer Funktion des Vakuumgeräts (10) bedingt.

5. Kommunikationssystem (1) nach einem der Ansprüche 1 bis 4,
wobei der Steuerparameter eine Einschränkung einer Funktion des Vakuumgeräts (10) bedingt.

6. Kommunikationssystem (1) nach einem der Ansprüche 1 bis 5, wobei das Rechenmodul (51) ausgebildet ist, die empfangenen Betriebsparameter mithilfe einer künstlichen Intelligenz auszuwerten.

7. Kommunikationssystem (1) nach einem der Ansprüche 1 bis 6, wobei das Kommunikationssystem weiter umfasst:
- ein zweites Vakuumgerät (20), umfassend:
- ein Überwachungsmodul (21), das ausgebildet ist, Betriebsparameter des zweiten Vakuumgeräts (20) zu überwachen; und
- ein drahtloses Schnittstellenmodul (22), das ausgebildet ist, mit dem drahtlosen Schnittstellenmodul (52) der Auswertungsvorrichtung (50) zu kommunizieren und die Betriebsparameter an die Auswertungsvorrichtung (50) bereitzustellen;
wobei das Rechenmodul (51) weiter ausgebildet ist, die empfangenen Betriebsparameter auszuwerten.

8. Verfahren zum Betreiben eines Kommunikationssystems (1), umfassend die Schritte:
- Überwachen von Betriebsparametern eines Vakuumgeräts (10);
- Kommunizieren mit einem drahtlosen Schnittstellenmodul (52) einer von dem Vakuumgerät entfernten Auswertungsvorrichtung (50), um die Betriebsparameter an die Auswertungsvorrichtung (50) bereitzustellen und an der entfernten Auswertungsvorrichtung (50) zu empfangen;
- Auswerten der empfangenen Betriebsparameter; und
- Bereitstellen von Steuerparametern an das Vakuumgerät (10) basierend auf der Auswertung der Betriebsparameter durch das drahtloses Schnittstellenmodul (52) der Auswertungsvorrichtung (50),
wobei das Auswerten der Betriebsparameter ausschließlich in der Auswertungsvorrichtung (50) erfolgt,
wobei das Vakuumgerät (10) und die Auswertungsvorrichtung (50) direkt miteinander kommunizieren,
wobei die Auswertungsvorrichtung (50) ein entfernter Server ist, der in einem Rechenzentrum steht, oder teilweise oder vollständig in einer Cloud realisiert ist,
wobei die Betriebsparameter solche Parameter sind, die Betriebsmedien und/oder Umgebungsgrößen des Vakuumgeräts betreffen und/oder die Messgrößen umfassen,
wobei das Auswerten der Betriebsparameter das Erstellen eines Gesundheitsindexes des Vakuumgeräts bzw. dessen Komponenten umfasst, wobei der Gesundheitsindex eine Zahl, insbesondere eine ganze Zahl oder eine Zahl mit einer oder zwei Nachkommastellen, ist, aus der sich ein allgemeiner Zustand des Vakuumgeräts erfassen lässt,
wobei die Steuerparameter eine Freischaltung einer Funktion des Vakuumgeräts (10) bedingen, oder
wobei die Steuerparameter eine Aktualisierung, insbesondere eine Firmware-Aktualisierung, für das Vakuumgerät (10) bzw. eine oder mehrere der Komponenten des Vakuumgeräts (10) umfassen.

## Claims

1. A communication system (1) comprising a vacuum device (10) and an evaluation apparatus (50), the vacuum device (10) comprising:
- a monitoring module (11) which is configured to monitor operating parameters of the vacuum device (10);
- a wireless interface module (12) which is configured to communicate with a wireless interface module (52) of an evaluation apparatus (50) remote from the vacuum apparatus (10) and to provide the operating parameters to the evaluation apparatus (50); and
- a control module (13), wherein the wireless interface module (12) of the vacuum device (10) is further configured to receive control parameters from the evaluation apparatus (50) in order to control the control module (13) of the vacuum device, wherein the control parameters are based on an evaluation of the operating parameters by the evaluation apparatus (50),
wherein the evaluation of the operating parameters takes place solely in the evaluation apparatus (50),
wherein the vacuum device (10) and the evaluation apparatus (50) communicate directly with one another,
wherein the evaluation apparatus (50) is a remote server which is located in a data center or which is partly or fully implemented in a cloud,
wherein the operating parameters are those parameters which relate to operating media and/or environmental variables of the vacuum device and/or which comprise measurement variables,
wherein the evaluation of the operating parameters comprises creating a health index of the vacuum device or its components, wherein the health index is a number, in particular an integer or a number with one or two decimal places, from which a general state of the vacuum device can be determined,
wherein the control parameters cause a function of the vacuum device (10) to be enabled, or
wherein the control parameters comprise an update, in particular a firmware update, for the vacuum device (10) or one or more of the components of the vacuum device (10), and
the evaluation apparatus (50) comprising:
- the wireless interface module (52) which is configured to communicate with the wireless interface module (12) of the vacuum device (10) remote from the evaluation apparatus (50) and to receive operating parameters monitored by the vacuum device (10); and
- a computing module (51) which is configured to evaluate the received operating parameters,
wherein the wireless interface module (52) of the evaluation apparatus (50) is further configured to provide control parameters to the vacuum device (10) based on the evaluation of the operating parameters from the first vacuum device (10).

2. A communication system (1) according to claim 1, wherein the wireless interface module (12) of the vacuum device (10) is configured to communicate with a wireless interface module (22) of a second vacuum device (20) and to receive operating parameters of the second vacuum device (20) from the second vacuum device (20), and wherein the wireless interface module (12) of the vacuum device (10) is further configured to provide the operating parameters of the second vacuum device (20) to the evaluation apparatus (50).

3. A communication system (1) according to claim 2, wherein the wireless interface module (12) of the vacuum device (10) is further configured to receive control parameters for the second vacuum device (20) from the evaluation apparatus (50) and to provide them to the interface module (22) of the second vacuum device (20).

4. A communication system (1) according to claims 1 to 3,
wherein the control parameter causes a function of the vacuum device (10) to be disabled.

5. A communication system (1) according to any one of the claims 1 to 4,
wherein the control parameter causes a function of the vacuum device (10) to be restricted.

6. A communication system (1) according to any one of the claims 1 to 5,
wherein the computing module (51) is configured to evaluate the received operating parameters using artificial intelligence.

7. A method (1) according to any one of the claims 1 to 6, wherein the communication system further comprises:
- a second vacuum device (20), comprising:
- a monitoring module (21) which is configured to monitor operating parameters of the second vacuum device (20);
- a wireless interface module (22) which is configured to communicate with the wireless interface module (52) of the evaluation apparatus (50) and to provide the operating parameters to the evaluation apparatus (50); and
wherein the computing module (51) is further configured to evaluate the received operating parameters.

8. A method for operating a communication system (1) comprising the steps:
- monitoring operating parameters of a vacuum device (10);
- communicating with a wireless interface module (52) of an evaluation apparatus (50) remote from the vacuum device to provide the operating parameters to the evaluation apparatus (50) and to receive them at the remote evaluation apparatus (50);
- evaluating the received operating parameters; and
- providing control parameters to the vacuum device (10) based on the evaluation of the operating parameters by the wireless interface module (52) of the evaluation apparatus (50),
wherein the evaluation of the operating parameters takes place solely in the evaluation apparatus (50),
wherein the vacuum device (10) and the evaluation apparatus (50) communicate directly with one another,
wherein the evaluation apparatus (50) is a remote server which is located in a data center or which is partly or fully implemented in a cloud,
wherein the operating parameters are those parameters which relate to operating media and/or environmental variables of the vacuum device and/or which comprise measurement variables,
wherein the evaluation of the operating parameters comprises creating a health index of the vacuum device or its components, wherein the health index is a number, in particular an integer or a number with one or two decimal places, from which a general state of the vacuum device can be determined,
wherein the control parameters cause a function of the vacuum device (10) to be enabled, or
wherein the control parameters comprise an update, in particular a firmware update, for the vacuum device (10) or one or more of the components of the vacuum device (10).

## Revendications

1. Système de communication (1) comprenant un appareil à vide (10) et un dispositif d'évaluation (50), l'appareil à vide (10) comprenant :
- un module de surveillance (11) conçu pour surveiller les paramètres de fonctionnement de l'appareil à vide (10) ;
- un module d'interface sans fil (12) conçu pour communiquer avec un module d'interface sans fil (52) d'un dispositif d'évaluation (50) distant de l'appareil à vide (10) et pour fournir les paramètres de fonctionnement au dispositif d'évaluation (50) ; et
- un module de commande (13), le module d'interface sans fil (12) de l'appareil à vide (10) étant en outre conçu pour recevoir des paramètres de commande du dispositif d'évaluation (50) afin de commander le module de commande (13) de l'appareil à vide, les paramètres de commande étant basés sur une évaluation des paramètres de fonctionnement par le dispositif d'évaluation (50),
dans lequel
l'évaluation des paramètres de fonctionnement est effectuée exclusivement dans le dispositif d'évaluation (50),
l'appareil à vide (10) et le dispositif d'évaluation (50) communiquent directement entre eux,
le dispositif d'évaluation (50) est un serveur distant situé dans un centre de données ou réalisé en partie ou en totalité dans un cloud,
les paramètres de fonctionnement sont des paramètres qui concernent les fluides de fonctionnement et/ou les grandeurs environnementales de l'appareil à vide et/ou qui comprennent les grandeurs mesurées,
l'évaluation des paramètres de fonctionnement comprend la création d'un indice de santé de l'appareil à vide ou de ses composants, l'indice de santé étant un nombre, en particulier un nombre entier ou un nombre avec une ou deux décimales, permettant de déterminer l'état général de l'appareil à vide,
les paramètres de commande entraînent l'activation d'une fonction de l'appareil à vide (10), ou
les paramètres de commande comprennent une mise à jour, en particulier une mise à jour du micrologiciel, pour l'appareil à vide (10) ou pour un ou plusieurs des composants de l'appareil à vide (10), et
le dispositif d'évaluation (50) comprend :
- le module d'interface sans fil (52), conçu pour communiquer avec le module d'interface sans fil (12) de l'appareil à vide (10) distant du dispositif d'évaluation (50) et pour recevoir des paramètres de fonctionnement surveillés par l'appareil à vide (10) ; et
- un module de calcul (51) conçu pour évaluer les paramètres de fonctionnement reçus,
le module d'interface sans fil (52) du dispositif d'évaluation (50) est en outre conçu pour fournir des paramètres de commande à l'appareil à vide (10) sur la base de l'évaluation des paramètres de fonctionnement provenant du premier appareil à vide (10).

2. Système de communication (1) selon la revendication 1,
dans lequel le module d'interface sans fil (12) de l'appareil à vide (10) est conçu pour communiquer avec un module d'interface sans fil (22) d'un deuxième appareil à vide (20) et pour, en provenance du deuxième appareil à vide (20), recevoir des paramètres de fonctionnement du deuxième appareil à vide (20), et le module d'interface sans fil (12) de l'appareil à vide (10) est en outre conçu pour fournir les paramètres de fonctionnement du deuxième appareil à vide (20) au dispositif d'évaluation (50).

3. Système de communication (1) selon la revendication 2,
dans lequel le module d'interface sans fil (12) de l'appareil à vide (10) est en outre conçu pour recevoir des paramètres de commande pour le deuxième appareil à vide (20) en provenance du dispositif d'évaluation (50) et pour les fournir au module d'interface (22) du deuxième appareil à vide (20).

4. Système de communication (1) selon les revendications 1 à 3,
dans lequel le paramètre de commande entraîne la désactivation d'une fonction de l'appareil à vide (10).

5. Système de communication (1) selon l'une des revendications 1 à 4, dans lequel le paramètre de commande entraîne la restriction d'une fonction de l'appareil à vide (10).

6. Système de communication (1) selon l'une des revendications 1 à 5, dans lequel le module de calcul (51) est conçu pour évaluer les paramètres de fonctionnement reçus à l'aide d'une intelligence artificielle.

7. Système de communication (1) selon l'une des revendications 1 à 6, le système de communication comprenant en outre :
- un deuxième appareil à vide (20) comprenant :
∘ un module de surveillance (21) conçu pour surveiller les paramètres de fonctionnement du deuxième appareil à vide (20) ; et
∘ un module d'interface sans fil (22) conçu pour communiquer avec le module d'interface sans fil (52) du dispositif d'évaluation (50) et pour fournir les paramètres de fonctionnement au dispositif d'évaluation (50) ;
le module de calcul (51) étant en outre conçu pour évaluer les paramètres de fonctionnement reçus.

8. Procédé pour faire fonctionner un système de communication (1), comprenant les étapes consistant à :
- surveiller les paramètres de fonctionnement d'un appareil à vide (10) ;
- communiquer avec un module d'interface sans fil (52) d'un dispositif d'évaluation (50) distant de l'appareil à vide afin de fournir les paramètres de fonctionnement au dispositif d'évaluation (50) et de les recevoir sur le dispositif d'évaluation (50) distant ;
- évaluer les paramètres de fonctionnement reçus ; et
- fournir des paramètres de commande à l'appareil à vide (10) sur la base de l'évaluation des paramètres de fonctionnement par le module d'interface sans fil (52) du dispositif d'évaluation (50),
dans lequel
l'évaluation des paramètres de fonctionnement est effectuée exclusivement dans le dispositif d'évaluation (50),
l'appareil à vide (10) et le dispositif d'évaluation (50) communiquent directement entre eux,
le dispositif d'évaluation (50) est un serveur distant situé dans un centre de données ou réalisé en partie ou en totalité dans un cloud,
les paramètres de fonctionnement sont des paramètres qui concernent les fluides de fonctionnement et/ou les grandeurs environnementales de l'appareil à vide et/ou qui comprennent les grandeurs mesurées,
l'évaluation des paramètres de fonctionnement comprend la création d'un indice de santé de l'appareil à vide ou de ses composants, l'indice de santé étant un nombre, en particulier un nombre entier ou un nombre avec une ou deux décimales, permettant de déterminer l'état général de l'appareil à vide,
les paramètres de commande entraînent l'activation d'une fonction de l'appareil à vide (10), ou
les paramètres de commande comprennent une mise à jour, en particulier une mise à jour du micrologiciel, pour l'appareil à vide (10) ou pour un ou plusieurs des composants de l'appareil à vide (10).
